# EUROPÄISCHE PATENTANMELDUNG

(11) **EP 4 331 890 A1**
(43) Veröffentlichungstag der Anmeldung: **06.03.2024**
(21) Anmeldenummer: 23193312.8
(22) Anmeldetag: 24.08.2023
(51) Int. Cl.: B60L 3/00, B60L 53/10, B60L 53/16, B60L 53/18, H02H 5/04, H01R 13/66

(54) **BETRIEBSVERFAHREN FÜR EINE VERSORGUNGSSTATION UND VERWENDUNG EINES TEMPERATURSENSORS ALS DIEBSTAHLINDIKATOR**

(30) Priorität: 26.08.2022 DE 102022121713
(71) Anmelder: Compleo Charging Solutions GmbH & Co. KG, 44379 Dortmund (DE)
(72) Erfinder: Kachouh, Checrallah, 44227 Dortmund (DE)
(74) Vertreter: Wickord, Wiro

(57) **Zusammenfassung**

Die Erfindung betrifft ein Betriebsverfahren für eine Versorgungsstation, insbesondere eine DC-Versorgungsstation, wobei die Versorgungsstation eingerichtet ist zum Bereitstellen elektrischer Energie für ein elektrisch betreibbares Fahrzeug und eine Auswerteeinheit sowie eine Ladekabelbaugruppe mit einem ersten Ladeleiter und mit einem zweiten Ladeleiter, mit einem dem ersten Ladeleiter zugeordneten ersten Anschlusspin und mit einem dem zweiten Ladeleiter zugeordneten zweiten Anschlusspin und mit mindestens einem mit der Auswerteeinheit zusammenwirkenden Temperatursensor aufweist, umfassend die folgenden Schritte:
- der mindestens eine Temperatursensor ermittelt eine Temperatur des ersten Ladeleiters und/oder des zweiten Ladeleiters und/oder des ersten Anschlusspins und/oder des zweiten Anschlusspins und stellt einen zu der Temperatur korrelierenden Messwert über ein Sensorsignal bereit;
- die Auswerteeinheit überwacht den mindestens einen Temperatursensor hinsichtlich seiner Funktionsfähigkeit, indem die Auswerteeinheit das Anliegen und den Wegfall des Sensorsignals des mindestens einen Temperatursensors erkennt;
- die Auswerteeinheit löst beim Wegfall des Sensorsignals des mindestens einen Temperatursensors ein Alarmsignal aus.

Ferner betrifft die Erfindung die Verwendung eines in der Versorgungsstation vorhandenen Temperatursensors als Diebstahlindikator.

## Beschreibung

Die Erfindung betrifft ein Betriebsverfahren für eine Versorgungsstation, insbesondere eine DC-Versorgungsstation, wobei die Versorgungsstation eingerichtet ist zum Bereitstellen elektrischer Energie für ein elektrisch betreibbares Fahrzeug. Ferner betrifft die Erfindung die Verwendung eines in der Versorgungsstation vorhandenen Temperatursensors als Diebstahlindikator.

Versorgungsstationen, die der Bereitstellung elektrischer Energie für ein elektrisch betreibbares Fahrzeug dienen, werden zunehmend im öffentlichen oder privaten Raum installiert. Sie sind an ein Versorgungsnetz angeschlossen, dem sie die Energie für das elektrisch betreibbare Fahrzeug entnehmen, und werden über eine Ladekabelbaugruppe mit dem elektrisch betreibbaren Fahrzeug verbunden.

Die Ladekabelbaugruppe kann beispielsweise als externe Baugruppe realisiert werden. Ein Ladekabel der Ladekabelbaugruppe sieht dabei typischerweise an seinen beiden freien Enden je einen Ladekabelstecker vor. Zum Verbinden des Fahrzeugs mit der Versorgungsstation werden die Ladekabelstecker an das Fahrzeug einerseits und die Versorgungsstation andererseits angeschlossen. Derartige Ladekabelbaugruppen werden typischerweise im Fahrzeug mitgeführt oder im privaten Bereich vorgehalten.

Beispielsweise kann die Versorgungsstation über ein angeschlagenes Ladekabel verfügen. Die Ladekabelbaugruppe sieht dann nur einen Ladekabelstecker vor, welcher an einem freien Ende des Ladekabels vorgesehen ist. Das andere Ende des Ladekabels wird demgegenüber aus dem Gehäuse der Versorgungsstation herausgeführt. Die Ladekabelbaugruppe ist insofern fester Bestandteil der Versorgungsstation. Weit verbreitet sind beispielsweise Ladekabelbaugruppen nach dem CCS-Standard.

In beiden Fällen dienen sogenannte Anschlusspins der Kontaktierung. Die Anschlusspins sind in dem wenigstens einen Ladekabelstecker der Ladekabelbaugruppe vorgesehen und mit den Ladeleitern des Ladekabels verbunden. Die Anschlusspins stehen während des Ladevorgangs im berührenden Kontakt zu den korrespondierenden Anschlusselemente der Versorgungsstation beziehungsweise des elektrisch betreibbaren Fahrzeugs und bilden die elektrische Kontaktierung.

Die Versorgungsstation kann überdies dazu dienen, in einem Energiespeicher des elektrisch betreibbaren Fahrzeugs gespeicherte Energie in das Versorgungsnetz zu speisen. Die Rückspeisung der Energie kann beispielsweise der Stabilisierung des Versorgungsnetzes dienen. Der Anschluss des elektrisch betreibbaren Fahrzeugs an die Versorgungsstation erfolgt dabei in analoger Weise über die Ladekabelbaugruppe mit dem Ladekabel und dem mindestens einen Ladekabelstecker.

Die Bereitstellung elektrischer Energie für ein elektrisch betreibbares Fahrzeug erfolgt über eine AC-Versorgungsstation oder eine DC-Versorgungsstation, wobei die DC-Versorgungsstation insbesondere bei hohen Ladeleistungen und daraus resultierend bei hohen Ladeströmen verwendet wird. Insbesondere bei den DC-Versorgungsstationen kommen Ladekabel zum Einsatz, die einen vergleichsweise großen Querschnitt, ein hohes Gewicht und eine beachtliche Steifigkeit aufweisen. Insofern werden DC-Versorgungsstation häufig mit einem angeschlagenen Ladekabel realisiert. Die Ladekabelbaugruppe ist dann also Teil der Versorgungsstation. Zugleich werden, auch aufgrund der hohen Ladeströme, insbesondere bei DC-Versorgungsstationen Sicherheitsvorkehrungen getroffen, um den Ladevorgang zu überwachen. Beispielsweise ist bekannt, mit Temperatursensoren, die als Teil der Ladekabelbaugruppe vorgesehen sind, die Temperatur eines ersten und/oder eines zweiten Ladeleiters und/oder eines dem ersten Ladeleiter beziehungsweise dem zweiten Ladeleiter zugeordneten ersten Anschlusspins und/oder zweiten Anschlusspins zu überwachen. Der Temperatursensor ist beispielsweise in dem Ladekabelstecker angeordnet. Er ist typischerweise über eine Signalleitung einer Auswerte- beziehungsweise Steuereinheit der Versorgungsstation verbunden und stellt einen zu der Temperatur korrelierenden Messwert als Sensorsignal bereit. Die Auswerteeinheit kann dann kritische Betriebszustände, die mit einer unzulässig hohen Temperatur einhergehen, erkennen und beispielsweise den Ladevorgang abbrechen.

Versorgungsstationen beziehungsweise Ladekabelbaugruppen mit Temperatursensoren beziehungsweise einer Temperaturüberwachung sind beispielsweise aus der EP 3 686 047 A1, der DE 10 2018 217 743 A1 und der WO 2015/099776 A1 bekannt.

Zunehmend ist nun zu beobachten, dass mit steigendem Kupferpreisen die Diebstähle von Kupferleitungen zunehmen. Dieses Problem betrifft auch im öffentlichen Raum oder anderweitig zugänglich installierten Versorgungsstationen und dort schwerpunktmäßig solche mit angeschlagenen Ladekabel. Insbesondere DC-Versorgungsstationen sind hierbei aufgrund der vergleichsweise großen Querschnitte der Ladeleiter des Ladekabels als Rohstoffquelle in den Fokus von Dieben gerückt.

Aufgabe der vorliegenden Erfindung ist es, ein Verfahren zur Erkennung eines Durchtrennens des Ladekabels bereitzustellen.

Zur Lösung der Aufgabe weist die Erfindung die Merkmale des Patentanspruchs 1 auf. Demzufolge umfasst ein Betriebsverfahren für eine Versorgungsstation, welche der Bereitstellung elektrischer Energie für ein elektrisch betreibbares Fahrzeug dient und eine Auswerteeinheit, einen Ladekabelbaugruppe mit einem ersten und einem zweiten Ladeleiter, mit einem dem ersten Ladeleiter zugeordneten ersten Anschlusspin, mit einem dem zweiten Ladeleiter zugeordneten zweiten Anschlusspin und mit mindestens einem mit der Auswerteeinheit zusammenwirkenden Temperatursensor aufweist, die folgenden Schritte:
- der mindestens eine Temperatursensor ermittelt eine Temperatur des ersten Ladeleiters und/oder des zweiten Ladeleiters und/oder des ersten Anschlusspins und/oder des zweiten Anschlusspins und stellt einen zu der Temperatur korrelierenden Messwert über ein Sensorsignal bereit;
- die Auswerteeinheit überwacht den mindestens einen Temperatursensor hinsichtlich seiner Funktionsfähigkeit, indem die Auswerteeinheit das Anliegen und/oder den Wegfall des Sensorsignals des mindestens einen Temperatursensors erkennt;
- die Auswerteeinheit löst beim Wegfall des Sensorsignals des mindestens einen Temperatursensors ein Alarmsignal aus.

Der besondere Vorteil der Erfindung besteht darin, dass ein Durchtrennen des Ladekabels der Ladekabelbaugruppe detektiert beziehungsweise erkannt werden kann, ohne dass zusätzliche Bauteile beziehungsweise Funktionskomponenten vorzusehen sind. Die erfindungsgemäße Versorgungsstation stellt also kostenneutral eine zusätzliche Überwachungsfunktion bereit und nutzt hierfür den ohnehin vorhandenen Temperatursensor, welcher als Teil der Ladekabelbaugruppe vorgesehen ist und der Überwachung der Temperatur des ersten Ladeleiters und/oder des zweiten Ladeleiters und/oder des ersten Anschlusspins und/oder des zweiten Anschlusspins dient. Zudem wird ein Alarmsignal ausgelöst, wenn erkannt wird, dass das Sensorsignal des Temperatursensors nicht mehr anliegt und demzufolge anzunehmen ist, dass das Ladekabel durchtrennt wurde.

Der Temperatursensor kann beispielsweise die Temperatur kontinuierlich überwachen. Beispielsweise kann die Temperatur in regelmäßigen oder unregelmäßigen Zeitintervallen und also nicht kontinuierlich ermittelt werden. Der zu der Temperatur korrelierende Messwert des Temperatursensors kann als Sensorsignal analog und/oder digital bereitgestellt werden.

Zur Realisierung kann ein separater Temperatursensor, beispielsweise ein PT1000, verwendet werden. Ebenso ist es möglich, eine Temperaturüberwachungsfunktion zu integrieren und auf einen als separates Bauteil ausgebildeten Temperatursensor zu verzichten. Beispielsweise kann ein Ladeleiter mit einem temperaturabhängigen Widerstandswert verwendet, eine Änderung des Widerstandswerts überwacht und aus der Änderung des Widerstands des Ladeleiters die Temperatur ermittelt werden.

Aus der Funktions- und Betriebsweise des Temperatursensors erkennt die Auswerteeinheit den Wegfall des Sensorsignals beispielsweise dann, wenn ein kontinuierlich erwartetes Sensorsignal nicht mehr anliegt oder ein maximales Zeitintervall bei einem diskret arbeitenden Temperatursensors überschritten wird.

Die Auswerteeinheit kann als separate Baugruppe ausgeführt und innerhalb oder außerhalb der Versorgungsstation verortet sein. Ebenso kann vorgesehen sein, dass die Auswerteeinheit funktional gebildet ist, zumindest teilweise Funktionskomponenten anderer Funktionseinheiten der Versorgungsstation mit verwendet und/oder als Teil einer Steuer- und/oder Kommunikationseinheit der Versorgungsstation realisiert ist beziehungsweise mit diesen zusammenwirkt zur Realisierung der Diebstahlerkennungsfunktion.

Das Alarmsignal, welches von der Auswerteeinheit beim Wegfall des Sensorsignals des mindestens einen Temperatursensors ausgelöst wird, kann bedarfsgerecht unterschiedlich ausgeprägt sein. Beispielsweise kann ein stummer Alarm ausgelöst werden. Bei einem stummen Alarm kann eine Benachrichtigung an den Betreiber und/oder Besitzer der Versorgungsstation, einen Sicherheitsdienst und/oder die Polizei gesendet werden. Ein stummer Alarm kann insbesondere so ausgebildet sein, dass er vor Ort nicht erkannt wird. Es ist insofern möglich, kurzfristig Maßnahmen einzuleiten und beispielsweise Sicherheitspersonal zur Versorgungsstation zu schicken, dem es gelingen kann, so rechtzeitig vor Ort zu sein, dass Täter identifiziert, gestört und/oder festgehalten werden können. Beispielsweise kann ein optisches und oder akustisches Alarmsignal ausgelöst werden, welches die Täter vertreibt und so zumindest den Diebstahl verhindern beziehungsweise die Aufmerksamkeit Dritter auf die Täter lenken kann.

Nach einer bevorzugten Ausführungsform des erfindungsgemäßen Betriebsverfahrens sieht die Ladekabelbaugruppe einen ersten Temperatursensor und einen zweiten Temperatursensor vor. Der erste Temperatursensor und der zweite Temperatursensor wirken mit der Auswerteeinheit zusammen und stellen jeweils ein Sensorsignal bereit. Das Alarmsignal wird ausgelöst, wenn das Sensorsignal des ersten Sensors einerseits und das Sensorsignal des zweiten Sensors andererseits wegfällt. Vorteilhaft können durch das Vorsehen der zwei Temperatursensoren eine Manipulation am Ladekabel und das Durchtrennen des Ladekabels sicher erkannt und von einem normalen Defekt und/oder Ausfall eines Sensors beispielsweise durch einen Kabelbruch unterschieden werden. Die Wahrscheinlichkeit, dass beide Sensoren ausfallen oder defekt sind, ist gering, so dass der Ausfall beider Sensoren auf einen Diebstahl hinweist. Die Zuverlässigkeit des Verfahrens wird hierdurch weiter erhöht.

Nach einer Weiterbildung des erfindungsgemäßen Betriebsverfahrens wird der Alarm ausgelöst, wenn das erste Sensorsignal und das zweite Sensorsignal gleichzeitig oder quasi gleichzeitig wegfallen. Quasi gleichzeitig ist hierbei der Wegfall eines Sensorsignals dann, wenn aufgrund der engen zeitlichen Koppelung anzunehmen ist, dass das erste Sensorsignal und das zweite Sensorsignal aus gleichem Grund weggefallen sind. Zeitintervall von beispielsweise 30 Sekunden können hier zur Anwendung kommen. Das Zeitintervall kann insbesondere eine vordefinierte Länge aufweisen und so bestimmt sein, dass abhängig von der konstruktiven und materiellen Beschaffenheit des Ladekabels die typische Dauer des Durchtrennens des Ladekabels abgedeckt ist. Vorteilhaft erhöht sich die Zuverlässigkeit des Verfahrens durch die Betrachtung der Zeitkomponente beim Wegfall der Sensorsignale weiter.

Nach einer Weiterbildung des erfindungsgemäßen Betriebsverfahrens wird beim Wegfall des wenigstens einen Sensorsignals beziehungsweise beim Auslösen des Alarms eine Kamera der Versorgungsstation aktiviert. Mit der Kamera werden dann Aufnahmen von der Umgebung der Versorgungsstation gemacht, die dazu dienen können, die Täter, mögliche Zeugen und/oder Fahrzeuge der Umgebung zu fotografieren und zu identifizieren.

Nach einer Weiterbildung der Erfindung wird das Verfahren bei einer DC-Versorgungsstation genutzt. Insbesondere kann die Ladekabelbaugruppe nach dem CCS-Standard ausgeführt sein.

Die Erfindung betrifft weiter die Verwendung eines Temperatursensors der Versorgungsstation zur Erkennung eines Durchtrennens eines Ladekabels der Versorgungsstation, wobei das Ladekabel, der Temperatursensor und ein an einem freien Ende des Ladekabels vorgesehener Ladekabelstecker Teil einer Ladekabelbaugruppe der Versorgungsstation sind, wobei der Temperatursensor eine Temperatur eines ersten Ladeleiters und/oder eines zweiten Ladeleiters und/oder eines ersten Anschlusspins und/oder eines zweiten Anschlusspins der Ladekabelbaugruppe überwacht und einen zu der Temperatur korrelierenden Messwert als Sensorsignal bereitstellt und wobei der Wegfall des Sensorsignals erkannt und hieraus auf die Durchtrennung des Ladekabels geschlossen wird. Der Temperatursensor hat dabei eine doppelte Funktion. Er dient der Überwachung des ordnungsgemäßen Verlaufs des Ladevorgangs und zugleich als Diebstahlindikator beziehungsweise -sensor.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für elektrisch betreibbare Fahrzeuge mit und ohne eigenen Energiespeicher zur Verfügung gestellt werden.

## Patentansprüche

1. Betriebsverfahren für eine Versorgungsstation, bevorzugt für eine DC-Versorgungsstation, wobei die Versorgungsstation eingerichtet ist zum Bereitstellen elektrischer Energie für ein elektrisch betreibbares Fahrzeug und eine Auswerteeinheit sowie eine Ladekabelbaugruppe mit einem ersten Ladeleiter und mit einem zweiten Ladeleiter, mit einem dem ersten Ladeleiter zugeordneten ersten Anschlusspin und mit einem dem zweiten Ladeleiter zugeordneten zweiten Anschlusspin und mit mindestens einem mit der Auswerteeinheit zusammenwirkenden Temperatursensor aufweist, umfassend die folgenden Schritte:
- der mindestens eine Temperatursensor ermittelt eine Temperatur des ersten Ladeleiters und/oder des zweiten Ladeleiters und/oder des ersten Anschlusspins und/oder des zweiten Anschlusspins und stellt der Auswerteeinheit einen zu der Temperatur korrelierenden Messwert über ein Sensorsignal bereit;
- die Auswerteeinheit überwacht den mindestens einen Temperatursensor hinsichtlich seiner Funktionsfähigkeit, indem die Auswerteeinheit das Anliegen und den Wegfall des Sensorsignals des mindestens einen Temperatursensors erkennt;
- die Auswerteeinheit löst beim Wegfall des Sensorsignals des mindestens einen Temperatursensors ein Alarmsignal aus.

2. Betriebsverfahren nach Anspruch 1, **dadurch gekennzeichnet, dass** die Ladekabelbaugruppe einen ersten Temperatursensor und einen zweiten Temperatursensor aufweist, wobei der erste Temperatursensor und der zweite Temperatursensor mit der Auswerteeinheit zusammenwirken und jeweils ein Sensorsignal bereitstellen, und dass das Alarmsignal ausgelöst wird, wenn das Sensorsignal des ersten Temperatursensors und das Sensorsignal des zweiten Temperatursensors wegfallen.

3. Betriebsverfahren nach Anspruch 2, **dadurch gekennzeichnet, dass** das Alarmsignal ausgelöst wird, wenn das erste Sensorsignal und das zweite Sensorsignal gleichzeitig oder quasi gleichzeitig oder innerhalb eines vorgegebenen Zeitintervalls von bevorzugt 30 Sekunden wegfallen.

4. Betriebsverfahren nach Anspruch 2 oder 3, **dadurch gekennzeichnet, dass** mit dem zweiten Temperatursensor eine Temperatur des anderen Ladeleiters und/oder des anderen Anschlusspins ermittelt wird als mit dem ersten Temperatursensor.

5. Betriebsverfahren nach einem der Ansprüche 1 bis 4, **dadurch gekennzeichnet, dass** das Alarmsignal als ein stummer Alarm ausgebildet ist und dass eine Benachrichtigung an einen Betreiber der Versorgungsstation und/oder einen Besitzer der Versorgungsstation und/oder einen Sicherheitsdient und/oder die Polizei geschickt wird.

6. Betriebsverfahren nach einem der Ansprüche 1 bis 5, **dadurch gekennzeichnet, dass** beim Wegfall des wenigstens einen Sensorsignals ein akustisches und/oder optisches Alarmsignal erzeugt wird.

7. Betriebsverfahren nach einem der Ansprüche 1 bis 6, **dadurch gekennzeichnet, dass** beim Wegfall des Sensorsignals eine Kamera der Versorgungsstation aktiviert wird und Aufnahmen von der Umgebung der Versorgungsstation gemacht werden.

8. Verwendung eines Temperatursensors einer Versorgungsstation zur Erkennung eines Durchtrennens eines Ladekabels der Versorgungsstation, wobei das Ladekabel, der Temperatursensor sowie ein an einem freien Ende des Ladekabels vorgesehener Ladekabelstecker Teil einer Ladekabelbaugruppe sind, wobei der Temperatursensor eine Temperatur eines ersten Ladeleiters und/oder eines zweiten Ladeleiters und/oder eines ersten Anschlusspins und/oder eines zweiten Anschlusspins der Ladekabelbaugruppe überwacht und der Temperatursensor einen zu der Temperatur korrelierenden Messwert als Sensorsignal bereitstellt und wobei der Wegfall des Sensorsignals erkannt und hieraus auf die Durchtrennung des Ladekabels geschlossen wird.
